# EUROPEAN PATENT APPLICATION

(11) **EP 4 011 533 A1**
(43) Date of publication of application: **15.06.2022**
(21) Application number: 20851373.9
(22) Date of filing: 27.07.2020
(51) Int. Cl.: B23C 5/00, B23C 5/10, B23B 51/00

(54) **HEAD REPLACEABLE CUTTING TOOL, CUTTING HEAD, AND TOOL BODY**

(30) Priority: 09.08.2019 JP 2019147893
(71) Applicant: MOLDINO Tool Engineering, Ltd., Tokyo 130-0026 (JP)
(72) Inventor: INAGAKI Fumihiko, Narita-shi, Chiba 286-0825 (JP); TANAKA So, Narita-shi, Chiba 286-0825 (JP)
(74) Representative: Hoffmann Eitle
(86) International application number: PCT/JP2020/028681
(87) International publication number: WO 2021/029209

(57) **Abstract**

In this cutting tool with a replaceable cutting head, a cutting head (11) including a cutting edge (12) is detachably attached to a tip end portion of a shaft-like tool main body (1) rotated around an axis (O) in a tool rotation direction (T). The tool main body (1) and the cutting head (11) are attached to each other when an abutment surface of the tool main body (5) on a tip surface of the tool main body (1) abuts and adheres to an abutment surface of the cutting head (17) on a posterior end surface of the cutting head (11). A recessed portion (16) and a projecting portion (4) able to be inserted into this recessed portion (16) are respectively formed on the posterior end surface of the cutting head (11) and the tip surface of the tool main body (1). The recessed portion (16) and the projecting portion (4) are formed to increase in width in a circumferential direction toward an outer peripheral side in a radial direction with respect to the axis (O).

## Description

### TECHNICAL FIELD

The present invention relates to a cutting tool with a replaceable cutting head in which a cutting head including a cutting edge is detachably attached to a tip end portion of a shaft-like tool main body rotated around an axis in a tool rotation direction, a cutting head which is detachably attached to a tip end portion of a tool main body in this cutting tool with a replaceable cutting head, and a shaft-like tool main body in which a cutting head is detachably attached to a tip end portion thereof and which is rotated around an axis in a tool rotation direction in this cutting tool with a replaceable cutting head.

Priority is claimed on Japanese Patent Application No. 2019-147893, filed August 9, 2019, the content of which is incorporated herein by reference.

### [Background Art]

Regarding such a cutting tool with a replaceable cutting head, for example, Patent Document 1 discloses a cutting tool in which an attachment screw penetrating a screw insertion hole provided at an axial center of a replaceable edge tool (cutting head) is screwed into a screw hole provided on the axial center of a holder (tool main body) so that the replaceable edge tool is integrally attached to a tip end portion of the holder in an attachable/detachable manner, on the other hand, which includes a locking engagement portion constituted of a projecting engagement portion such as a key causing the holder and the replaceable edge tool to be engaged with each other such that they cannot relatively rotate and a recessed engagement place such as a key flute, and which performs predetermined machining with the replaceable edge tool when the replaceable edge tool is rotatively driven around the axial center together with the holder.

The cutting tool with a replaceable cutting head described in this Patent Document 1 has a columnar fitting shaft portion which is integrally provided at a part of the attachment screw positioned in a manner of straddling the replaceable edge tool and the holder, a cylindrical edge tool-side fitting hole which is provided in the screw insertion hole of the replaceable edge tool and performs concentric positioning of the replaceable edge tool and the fitting shaft portion by being fitted to the fitting shaft portion through clearance-fitting, and a cylindrical holder-side fitting hole which is provided at an opening part of the screw hole opening at a tip of the holder and performs concentric positioning of the holder and the fitting shaft portion by being fitted to the fitting shaft portion through clearance-fitting.

### [Citation List]

### [Patent Literature]

[Patent Document 1]
Japanese Unexamined Patent Application, First Publication No. 2007-167977

### SUMMARY OF INVENTION

### Technical Problem

However, in the cutting tool with a replaceable cutting head, the cutting head, and the tool main body described in this Patent Document 1, the projecting engagement portion and the recessed engagement portion constituting the locking engagement portion as described above serve as a key and key flute having substantially rectangular cross-sectional shapes at a right angle to a longitudinal direction as illustrated in FIGS. 2 and 3 of this Patent Document 1 and are formed to extend with a uniform width toward a diameter direction with respect to the axis of the tool main body.

For this reason, there is concern that an attachment strength or an attachment rigidity of the cutting head may become insufficient on the outer peripheral side of the cutting head on which a significant rotational moment acts due to a cutting torque particularly at the time of a cutting operation. Therefore, if a significant cutting load acts on the cutting edge of the cutting head at the time of a cutting operation, there is a concern that looseness may occur in the cutting head and deterioration in machining accuracy or machined surface roughness may be caused.

The present invention has been made under such a background, and an object thereof is to provide a cutting tool with a replaceable cutting head, a cutting head, and a tool main body, in which looseness can be prevented from occurring in the cutting head even if a significant cutting load acts on a cutting edge of the cutting head at the time of a cutting operation and high machining accuracy and excellent machined surface roughness can be achieved.

### Solution to Problem

In order to resolve the foregoing problems and achieve such an object, a cutting tool with a replaceable cutting head according to an aspect of the present invention is a cutting tool with a replaceable cutting head in which a cutting head including a cutting edge is detachably attached to a tip end portion of a shaft-like tool main body rotated around an axis in a tool rotation direction. The tool main body and the cutting head are attached to each other when an abutment surface of the tool main body on a tip surface of the tool main body abuts and adheres to an abutment surface of the cutting head on a posterior end surface of the cutting head. A recessed portion and a projecting portion able to be inserted into this recessed portion are respectively formed on the posterior end surface of the cutting head and the tip surface of the tool main body. The recessed portion and the projecting portion are formed to increase in width in a circumferential direction toward an outer peripheral side in a radial direction with respect to the axis.

A cutting head according to another aspect of the present invention is a cutting head which is detachably attached to a tip end portion of a shaft-like tool main body rotated around an axis in a tool rotation direction in such a cutting tool with a replaceable cutting head. The cutting head includes a cutting edge. An abutment surface of the cutting head which abuts and adheres to an abutment surface of the tool main body on a tip surface of the tool main body and a recessed portion into which a projecting portion formed on the tip surface of the tool main body is inserted or a projecting portion which is inserted into a recessed portion formed on the tip surface of the tool main body are formed on a posterior end surface of the cutting head. The recessed portion or the projecting portion is formed to increase in width in a circumferential direction toward an outer peripheral side in a radial direction with respect to the axis.

A tool main body according to another aspect of the present invention is a shaft-like tool main body in which a cutting head is detachably attached to a tip end portion thereof and which is rotated around an axis in a tool rotation direction in the cutting tool with a replaceable cutting head described above. An abutment surface of the tool main body which abuts and adheres to an abutment surface of the cutting head on a posterior end surface of the cutting head and a projecting portion which is inserted into a recessed portion formed on the posterior end surface of the cutting head or a recessed portion into which a projecting portion formed on the posterior end surface of the cutting head is inserted are formed on a tip surface of the tool main body. The projecting portion or the recessed portion is formed to increase in width in a circumferential direction toward an outer peripheral side in a radial direction with respect to the axis.

In the cutting tool with a replaceable cutting head, the cutting head, and the tool main body having such constitutions, since the recessed portion and the projecting portion able to be inserted into this recessed portion, which are respectively formed on the posterior end surface of the cutting head and the tip surface of the tool main body, are formed to increase in width in the circumferential direction toward the outer peripheral side in the radial direction with respect to the axis, the cutting head can be attached while a high attachment strength or a high attachment rigidity is secured on the outer peripheral side of the cutting head on which a significant rotational moment acts due to a cutting torque particularly at the time of a cutting operation.

For this reason, since not only can the cutting head be locked and attached to the tool main body but also looseness can be prevented from occurring in the cutting head even if a significant cutting load acts on the cutting edge of the cutting head at the time of a cutting operation, high machining accuracy and excellent machined surface roughness can be achieved.

When the recessed portion is formed on the posterior end surface of the cutting head and the projecting portion is formed on the tip surface of the tool main body, it is desirable that a wall surface of the projecting portion directed in the tool rotation direction and a wall surface of the recessed portion directed in a direction opposite to the tool rotation direction extend in the radial direction with respect to the axis. In addition, on the contrary, when the projecting portion is formed on the posterior end surface of the cutting head and the recessed portion is formed on the tip surface of the tool main body, it is desirable that a wall surface of the projecting portion directed in a direction opposite to the tool rotation direction and a wall surface of the recessed portion directed in the tool rotation direction extend in the radial direction with respect to the axis.

These wall surfaces serve as reception surfaces for receiving a rotational moment due to a cutting torque. However, these wall surfaces are formed to extend in the radial direction with respect to the axis. Therefore, when a cutting operation is performed while the cutting head is attached to the tip end portion of the tool main body in a state in which the wall surfaces abut each other, even if an excessive cutting load acts on the cutting edge, an action of a pulling stress pulling the cutting head to the outer peripheral side in the radial direction with respect to the axis or conversely, a compression stress compressing the cutting head to the inner peripheral side in the radial direction with respect to the axis can be curbed. For this reason, a situation in which damage to the cutting head occurring due to such a pulling stress or a compression stress can be prevented.

In the same manner, when the recessed portion is formed on the posterior end surface of the cutting head and the projecting portion is formed on the tip surface of the tool main body, it is desirable that the recessed portion and the projecting portion be also formed to increase in width in the circumferential direction toward the posterior end sides of the tool main body and the cutting head. On the contrary, when the projecting portion is formed on the posterior end surface of the cutting head and the recessed portion is formed on the tip surface of the tool main body, it is desirable that the recessed portion and the projecting portion be also formed to increase in width in the circumferential direction toward the tip sides of the tool main body and the cutting head.

Accordingly, the cutting head can be supported with a high attachment strength or a high attachment rigidity and looseness of the cutting head can be more reliably prevented at a part where the abutment surface of the tool main body on the tip surface of the tool main body separated from the cutting edge and the abutment surface of the cutting head on the posterior end surface of the cutting head abut and adhere to each other. In addition, since the cutting head and the tool main body can also be prevented from being significantly cracked more than necessary due to the recessed portion, a higher rigidity can be secured, and a cutting operation can be performed with higher accuracy.

The cutting edge may be a cutting edge of a cutting tap or a T-slot cutter, such as the cutting tool with a replaceable cutting head described in Patent Document 1, which is formed at only a part directed to the outer peripheral side of the cutting head. However, it may be a cutting edge of an end mill including a part directed to an outer peripheral side of this cutting head and a part directed to the tip side of the cutting head.

When a penetration hole opening on the abutment surface of the cutting head is formed along the axis in the cutting head, a screw hole is formed along the axis in the tool main body, and the cutting head is detachably attached to the tool main body by screwing a clamp screw including a head portion and inserted through the penetration hole into the screw hole, the recessed portion and the projecting portion are formed with an interval therebetween on the outer peripheral side in the radial direction with respect to the axis from an opening portion of the penetration hole and an opening portion of the screw hole so that interference between the clamp screw and the recessed portion or the projecting portion can be avoided.

In this case, when the penetration hole is formed to have a circular cross-sectional shape with a uniform inner diameter centered on the axis; a countersink hole communicating with the penetration hole and opening on the tip side of the cutting head is formed on the tip side of the cutting head; an attachment hole having a circular cross-sectional shape with a uniform inner diameter equivalent to an inner diameter of the penetration hole centered on the axis is formed in the opening portion of the screw hole toward the abutment surface of the tool main body at the tip end portion of the tool main body; and the clamp screw has the disk-shaped head portion which is accommodated in the countersink hole, a columnar shaft portion which extends to the posterior end side of this head portion and is fitted into the penetration hole and the attachment hole, and a male screw portion which extends to the posterior end side of this shaft portion and is screwed into the screw hole, interference between the shaft portion of the clamp screw fitted into the penetration hole and the attachment hole and the recessed portion or the projecting portion can be avoided, which is more desirable.

In a case in which the cutting head is detachably attached to the tool main body using the clamp screw, when the Vickers hardness of the cutting head is A, the Vickers hardness of the tool main body is B, and the Vickers hardness of the clamp screw is C, it is desirable that a relationship of A>B≥C or A≥B>C be established. Accordingly, since the clamp screw is always formed of a soft material having a lower Vickers hardness than the cutting head, elasticity can be applied to the clamp screw and the attachment strength of the cutting head can be improved.

### Advantageous Effects of Invention

As described above, according to the present invention, since not only can the cutting head be locked and attached to the tool main body but also the cutting head can be attached while a high attachment strength or a high attachment rigidity is secured on the outer peripheral side of the cutting head on which a significant rotational moment acts due to a cutting torque at the time of a cutting operation, looseness can be prevented from occurring in the cutting head even if a significant cutting load acts on a cutting edge of the cutting head at the time of a cutting operation, and thus high machining accuracy and excellent machined surface roughness can be achieved.

### BRIEF DESCRIPTION OF DRAWINGS

Fig. 1 is a perspective view illustrating a first embodiment of a cutting tool with a replaceable cutting head of the present invention.
Fig. 2 is a plan view of the embodiment illustrated in Fig. 1 viewed from a tip side in an axis direction.
Fig. 3 is a side view in a direction of Arrow W in Fig. 2.
Fig. 4 is a cross-sectional view along YY in Fig. 3.
Fig. 5 is an enlarged cross-sectional view of Part A in Fig. 4.
Fig. 6 is a side view in a direction of Arrow X in Fig. 2.
Fig. 7 is a cross-sectional view along ZZ in Fig. 6.
Fig. 8 is an enlarged cross-sectional view of Part B in Fig. 7.
Fig. 9 is an exploded perspective view of the embodiment illustrated in Fig. 1.
Fig. 10 is another exploded perspective view of the embodiment illustrated in Fig. 1.
Fig. 11 is an exploded side view of the embodiment illustrated in Fig. 1.
Fig. 12 is a perspective view illustrating a first embodiment of a cutting head of the present invention attached to the embodiment illustrated in Fig. 1.
Fig. 13 is a plan view of the embodiment illustrated in Fig. 12 viewed from the tip side in the axis direction.
Fig. 14 is a side view in a direction of Arrow W in Fig. 13.
Fig. 15 is a side view in a direction of Arrow X in Fig. 13.
Fig. 16 is a bottom view of the embodiment illustrated in Fig. 12 viewed from a posterior end side in the axis direction.
Fig. 17 is a perspective view illustrating a first embodiment of a tool main body of the present invention according to the embodiment illustrated in Fig. 1.
Fig. 18 is a plan view of the embodiment illustrated in Fig. 17 viewed from the tip side in the axis direction.
Fig. 19 is a side view in a direction of Arrow W in Fig. 18.
Fig. 20 is a perspective view illustrating a second embodiment of a cutting tool with a replaceable cutting head of the present invention.
Fig. 21 is a side view of the embodiment illustrated in Fig. 20.
Fig. 22 is a perspective view of a second embodiment of a cutting head of the present invention attached to the embodiment illustrated in Fig. 20 viewed from the posterior end side in the axis direction.
Fig. 23 is a side view of the embodiment illustrated in Fig. 22.
Fig. 24 is a bottom view of the embodiment illustrated in Fig. 22 viewed from the posterior end side in the axis direction.
Fig. 25 is an exploded perspective view of the embodiment illustrated in Fig. 20.
Fig. 26 is another exploded perspective view of the embodiment illustrated in Fig. 20.

### DESCRIPTION OF EMBODIMENTS

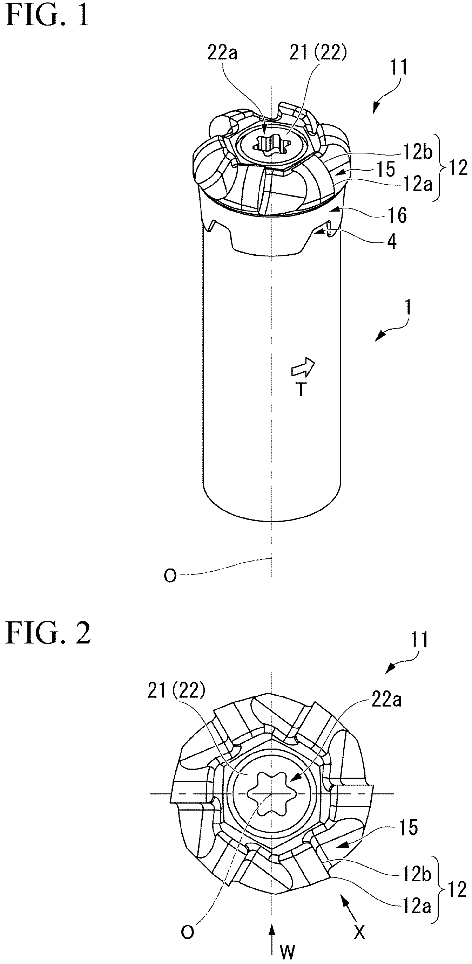

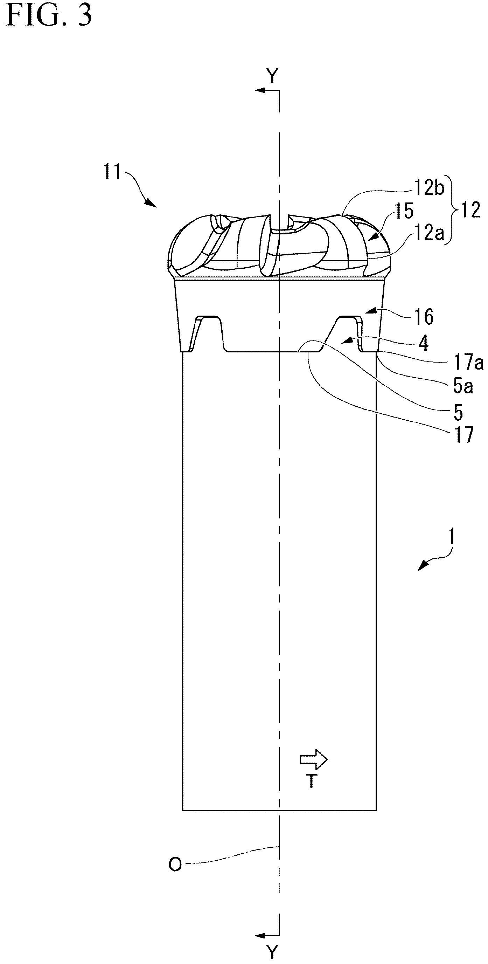

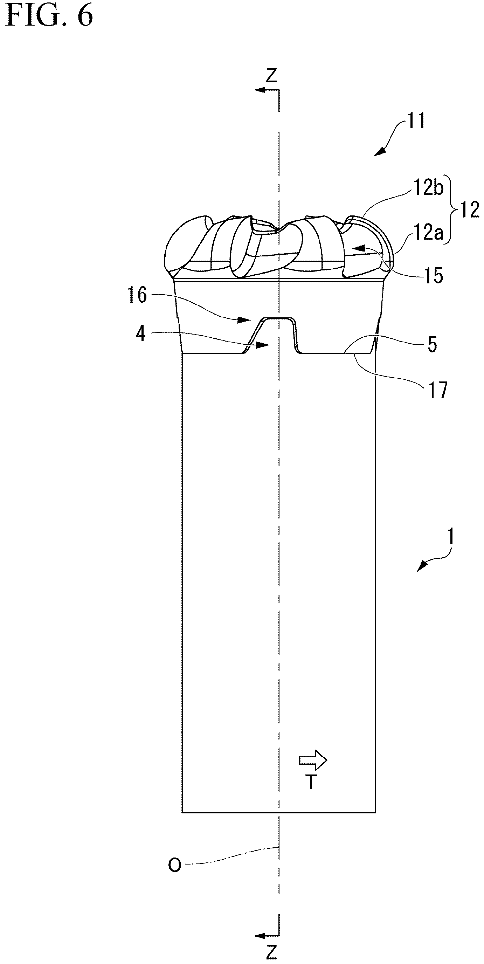

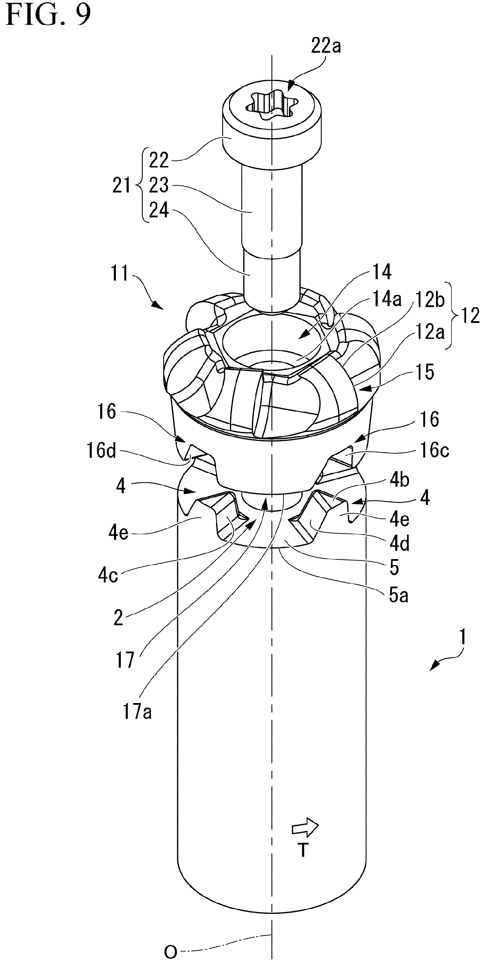

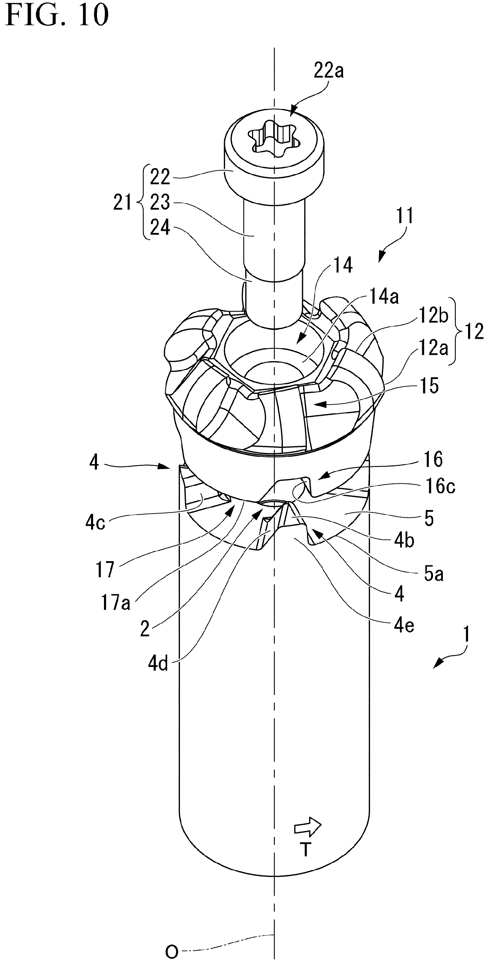

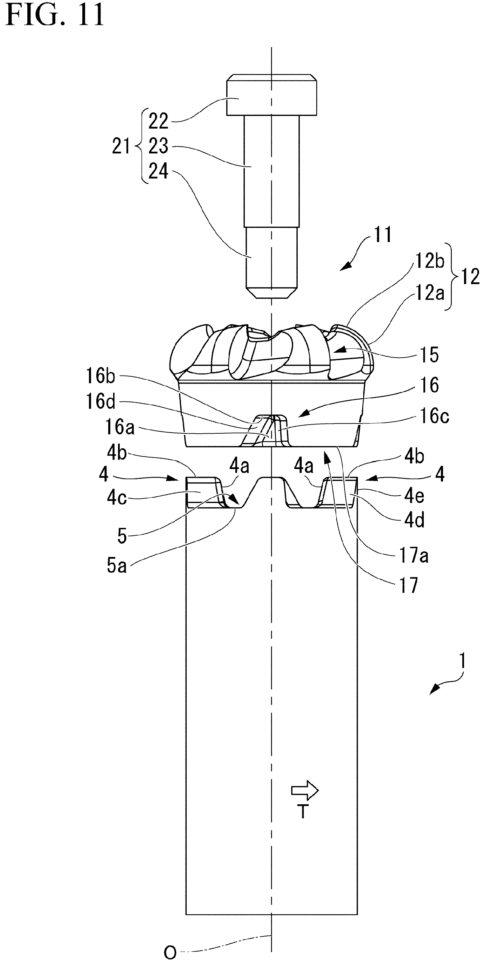

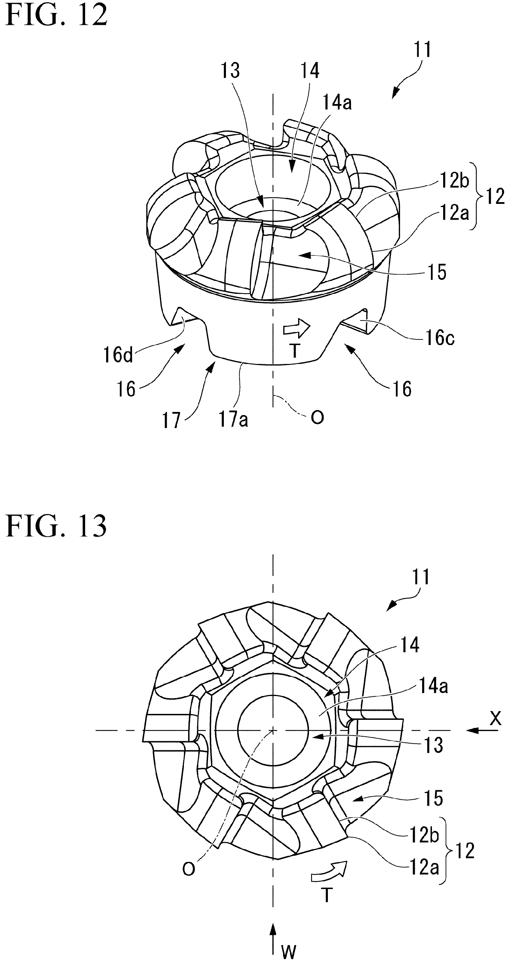

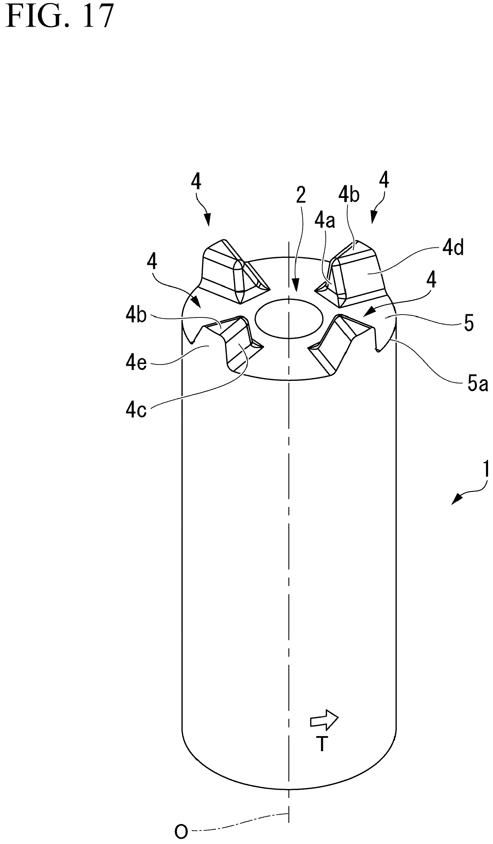

Figs. 1 to 11 illustrate an embodiment of a cutting tool with a replaceable cutting head of the present invention. Figs. 12 to 16 illustrate an embodiment of a cutting head of the present invention attached to this embodiment. Figs. 17 to 19 illustrate an embodiment of a tool main body of the present invention to which the cutting head of this embodiment is attached.

In the present embodiment, a tool main body 1 is formed of a metal material such as a steel material in a columnar shaft shape centered on an axis O as illustrated in Figs. 17 to 19. In addition, a cutting head 11 is formed of a cemented carbide or the like having a higher hardness than the tool main body 1 in a disk shape centered on the axis O as illustrated in Figs. 12 to 16.

In such a cutting tool with a replaceable cutting head, the cutting head 11 is attached to a tip end portion of the tool main body 1. Further, a posterior end portion of the tool main body 1 is held in a main shaft of a machine tool and is sent out in a direction intersecting the axis O while being rotated in a tool rotation direction T around the axis O so that a workpiece is subjected to a cutting operation by a cutting edge 12 formed in the cutting head 11.

In the tool main body 1, an attachment hole 2 which has a circular cross-sectional shape with a uniform inner diameter centered on the axis O and a screw hole 3 which extends from a bottom portion of this attachment hole 2 to a posterior end side in an axis O direction (a lower side in Figs. 1, 3, 4, 6, 7, 9 to 11, 17, and 19) centered on the axis O having a smaller diameter than the attachment hole 2 are formed at central portion on a tip surface thereof (an end surface on an upper side in Figs. 1, 3, 4, 6, 7, 9 to 11, 17, and 19).

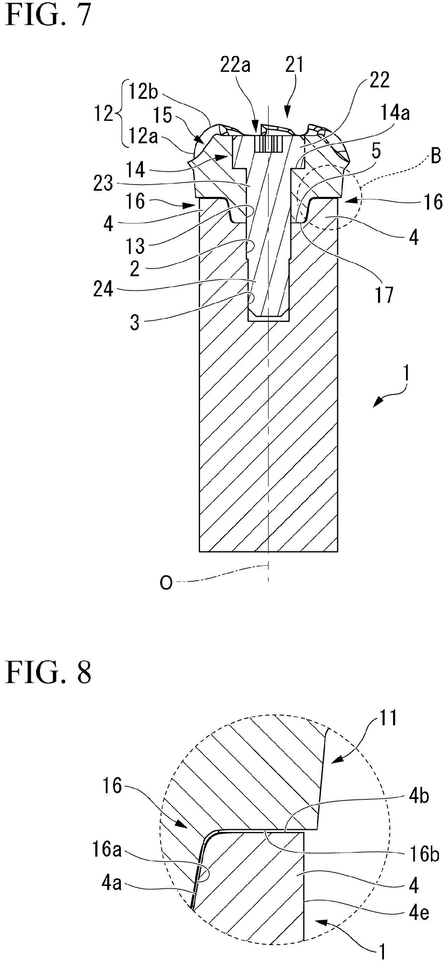

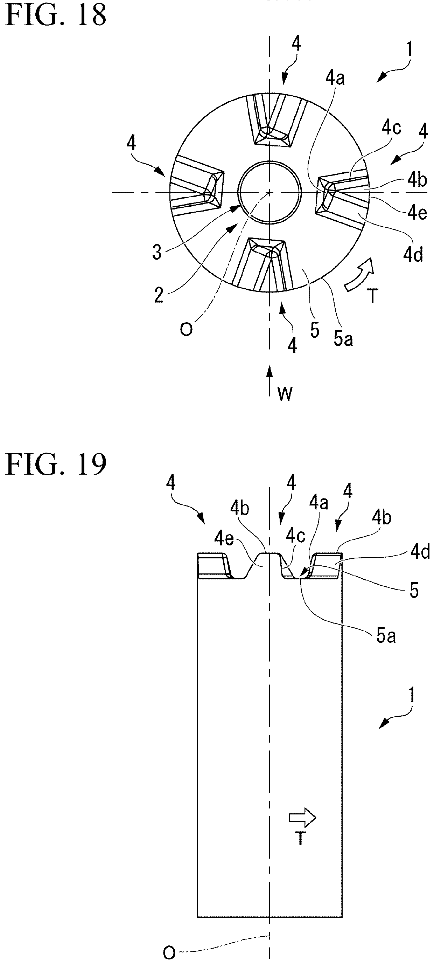

In the present embodiment, projecting portions 4 are formed on the tip surface of the tool main body 1. In the tool main body 1 of the present embodiment, a plurality of (four) projecting portions 4 are formed at intervals (equal intervals) in a circumferential direction. These projecting portions 4 have the same shapes and the same sizes as each other and are formed with intervals therebetween on an outer peripheral side in a radial direction with respect to the axis O from an opening portion of the attachment hole 2. As illustrated in Fig. 19, side surfaces 4a directed to the opening portion side of this attachment hole 2 are inclined to an inner peripheral side in the radial direction with respect to the axis O toward the posterior end side in the axis O direction, and tip surfaces 4b directed to a tip side in the axis O direction are positioned in a plane perpendicular to the axis O as illustrated in Figs. 7 and 19.

As illustrated in Fig. 19, in these projecting portions 4, wall surfaces 4c directed in the tool rotation direction T extend in a direction lying along the radial direction with respect to the axis O. In contrast, wall surfaces 4d of the projecting portions 4 directed in a direction opposite to the tool rotation direction T are directed in a direction opposite to the tool rotation direction T toward the posterior end side in the axis O direction as illustrated in Fig. 19 and are inclined at a uniform angle such that they separate from the wall surfaces 4c directed in the tool rotation direction T. Therefore, accordingly, the projecting portions 4 are formed to increase in width in the circumferential direction as illustrated in Figs. 17 and 18 toward the outer peripheral side in the radial direction with respect to the axis O and the posterior end side in the axis O direction. Namely, the lengths of the tip surfaces 4b of the projecting portions 4 in the circumferential direction and lengths of bottom surfaces of the projecting portions 4 (virtual surfaces positioned on the tip surface of the tool main body 1) in the circumferential direction are individually formed to increase toward the outer peripheral side in the radial direction with respect to the axis O.

On the tip surface of the tool main body 1, a part excluding these projecting portions 4 and the opening portion of the attachment hole 2 has a flat surface shape perpendicular to the axis O and serves as an abutment surface of the tool main body 5 on the tip surface according to the present embodiment. Therefore, an outer peripheral edge 5a of this abutment surface of the tool main body 5 is positioned on the circumference centered on the axis O. Side surfaces 4e of the projecting portions 4 directed to the outer peripheral side in the radial direction with respect to the axis O are formed to have cylindrical surface shapes flush with an outer peripheral surface of the tool main body 1.

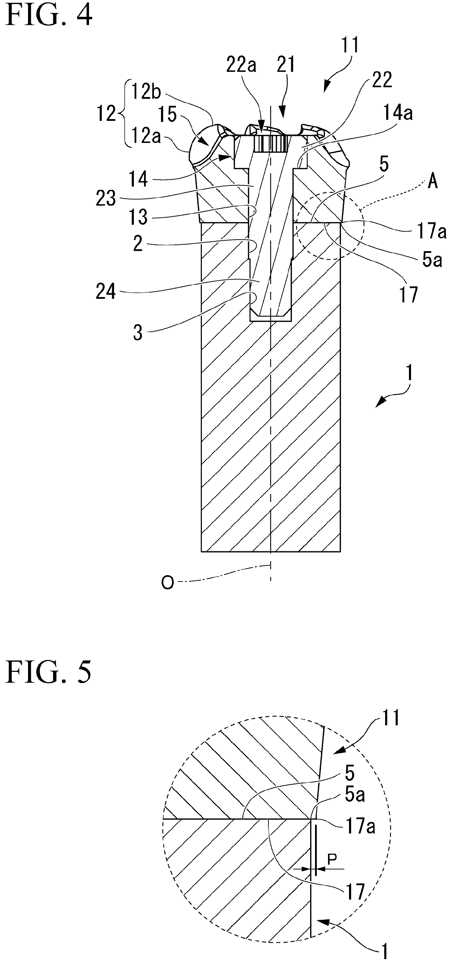

As illustrated in Figs. 4, 7, and 16, in the cutting head 11 attached to the tip end portion of such a tool main body 1, a penetration hole 13 having a uniform inner diameter centered on the axis O along the axis O is formed on the posterior end side of the central portion thereof (the lower side in Figs. 12, 14, and 15). The inner diameter of this penetration hole 13 is substantially equivalent to the inner diameter of the attachment hole 2 of the tool main body 1.

As illustrated in Figs. 4, 7, 12, and 13, a countersink hole 14 which communicates with the penetration hole 13, opens on the tip side of the cutting head 11, has a larger diameter than the penetration hole 13, and has a uniform inner diameter centered on the axis O or which has a tapered shape slightly increasing in inner diameter toward the tip side of the cutting head 11 is formed on the tip side of the central portion of the cutting head 11 (the upper side in Figs. 12, 14, and 15). In the case of the countersink hole 14 having a tapered inner peripheral surface, it provides a draft angle when the cutting head 11 is formed through powder press forming using a die as described below, and thus formability can be improved.

At the tip end portion of the cutting head 11, a plurality of (six) chip pockets 15 having recessed flute shapes are formed at intervals (equal intervals) in the circumferential direction with an interval from the opening portion of the countersink hole 14, and the cutting edge 12 is formed at side ridge portions of the wall surfaces of these chip pockets 15 directed in the tool rotation direction T.

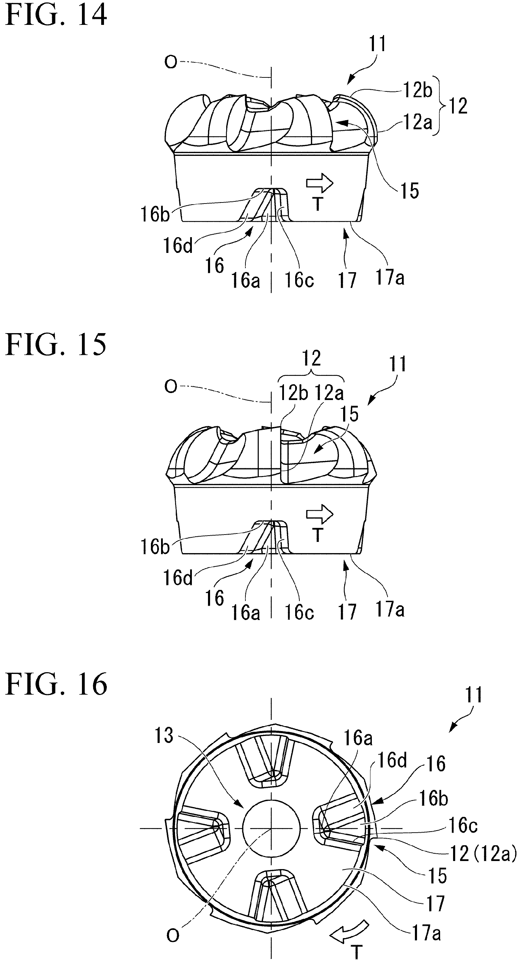

As illustrated in Fig. 14 viewed in the tool rotation direction T, the cutting edge 12 according to the present embodiment is a cutting edge having a corner edge shape of a radius end mill forming substantially a 1/4 arc shape from the tip inner peripheral side of the cutting head 11 toward the posterior end outer peripheral side and includes a part of an outer peripheral cutting edge 12a directed to the outer peripheral side of the cutting head 11 and a part of a bottom edge 12b directed to the tip side of the cutting head 11.

The outer peripheral surface of the posterior end portion of the cutting head 11 is formed to have a truncated cone shape decreasing in diameter toward the posterior end side. Moreover, as many (four) recessed portions 16 as the projecting portions 4 are formed at intervals (equal intervals) in the circumferential direction on a posterior end surface of the cutting head 11 such that they open on the outer peripheral surface of the posterior end portion of the cutting head 11, and the projecting portions 4 of the tool main body 1 can be respectively accommodated inside these recessed portions 16. That is, these recessed portions 16 also have the same shapes and the same sizes as each other but are formed to be slightly larger than the projecting portions 4, and the recessed portions 16 are formed with intervals therebetween on the outer peripheral side in the radial direction with respect to the axis O from the opening portion of the penetration hole 13 on the posterior end surface of the cutting head 11.

Inner wall surfaces 16a of these recessed portions 16 on the opening portion side of the penetration hole 13 are inclined to the inner peripheral side in the radial direction with respect to the axis O toward the posterior end side in the axis O direction, and bottom surfaces 16b directed to the posterior end side in the axis O direction are positioned in a plane perpendicular to the axis O as illustrated in Figs. 14 and 15. In addition, wall surfaces 16c of the recessed portions 16 directed in a direction opposite to the tool rotation direction T are formed to extend in the radial direction with respect to the axis O as illustrated in Figs. 14 to 16.

Wall surfaces 16d of the recessed portions 16 directed in the tool rotation direction T are directed in a direction opposite to the tool rotation direction T toward the posterior end side in the axis O direction as illustrated in Fig. 16 and are inclined at a uniform angle such that they separate from the wall surfaces 16c directed in a direction opposite to the tool rotation direction T. Therefore, accordingly, similar to the projecting portions 4, the recessed portions 16 are formed to increase in width in the circumferential direction as illustrated in Figs. 12 and 14 to 16 toward the outer peripheral side in the radial direction with respect to the axis O and the posterior end side in the axis O direction. Namely, the lengths of the bottom surfaces 16b of the recessed portions 16 in the circumferential direction and lengths of tip surfaces of the recessed portions 16 (virtual surfaces positioned on the posterior end surface of the cutting head 11) in the circumferential direction are individually formed to increase toward the outer peripheral side in the radial direction with respect to the axis O.

On the posterior end surface of the cutting head 11, a part excluding these recessed portions 16 and the opening portion of the penetration hole 13 has a flat surface shape perpendicular to the axis O and serves as an abutment surface of the cutting head 17 on the posterior end surface according to the present embodiment. Therefore, an outer peripheral edge 17a of the abutment surface of the cutting head 17 on the posterior end surface at the truncated cone-shaped posterior end portion of the cutting head 11 is positioned on the circumference centered on the axis O. A bottom surface 14a of the countersink hole 14 directed to the tip side in the axis O direction is parallel to this abutment surface of the cutting head 17 or inclined to be directed to the posterior end side toward the inner peripheral side of the cutting head 11 with respect to the abutment surface of the cutting head 17 at an angle of 5° or smaller in a cross section along the axis O.

The cutting head 11 formed of a hard material such as a cemented carbide is manufactured along basic processes of powder metallurgy technology. That is, when the cutting head 11 is made of a cemented carbide, first, powder press forming using a die is performed using granulated powder in a granular state having tungsten carbide powder and cobalt powder as main components and having chromium, tantalum, or the like as accessory components as necessary.

An obtained press-formed body is sintered for a predetermined time inside a sintering furnace controlled to have a suitable atmosphere and a suitable temperature so that a sintered body, which will become the cutting head 11, can be manufactured. A basic shape of the cutting head 11 is reflected through a design of the die. Moreover, in order to achieve high accuracy in the inner diameter of the penetration hole 13 of the cutting head 11 and the shape of the edge tip, machining operation using a cutting tool or a grindstone may be performed as necessary.

Such a cutting head 11 is attached coaxially with the axis O when the abutment surface of the tool main body 5 of the tool main body 1 abuts and adheres to the abutment surface of the cutting head 17. In a state in which the abutment surface of the tool main body 5 and the abutment surface of the cutting head 17 are attached to each other in this manner, the outer peripheral edge 17a of the abutment surface of the cutting head 17 protrudes to the outer peripheral side in the radial direction with respect to the axis O beyond the outer peripheral edge 5a of the abutment surface of the tool main body 5 as illustrated in Fig. 5. Here, in the present embodiment, a protruding amount P of the outer peripheral edge 17a of the abutment surface of the cutting head 17 in the radial direction with respect to the axis O with respect to the outer peripheral edge 5a of this abutment surface of the tool main body 5 is set to be within a range of 0.05 mm to 0.8 mm.

In the present embodiment, as illustrated in Figs. 4, 7, and 9 to 11, a clamp screw 21 is used for attaching the cutting head 11 to the tool main body 1 coaxially with the axis O. This clamp screw 21 is formed of a metal material, centered on the axis O, such as a steel material having a lower hardness than a cemented carbide or the like forming the cutting head 11 and having a hardness equivalent to that of the tool main body 1 or lower than that of the tool main body 1 and includes a disk-shaped head portion 22, a columnar shaft portion 23 which extends to the posterior end side of this head portion 22, and a male screw portion 24 which further extends to the posterior end side of this shaft portion 23.

The head portion 22 has a larger outer diameter than the penetration hole 13 with a size which can be accommodated in the countersink hole 14 of the cutting head 11, the shaft portion 23 has an outer diameter which can be fitted into the penetration hole 13 of the cutting head 11 and the attachment hole 2 of the tool main body 1 having inner diameters substantially equivalent to each other, and the male screw portion 24 can be screwed into the screw hole 3 of the tool main body 1. In addition, an engagement hole 22a with which a work tool such as a wrench can engage is formed on the tip surface of the head portion 22. The outer peripheral surface of the head portion 22 may have a cylindrical surface shape centered on the axis O or may have a tapered shape slightly increasing in diameter toward the tip side. When such a head portion 22 has a tapered shape, the head portion 22 can be easily attached and detached.

In the cutting head 11, the projecting portions 4 of the tool main body 1 are inserted into the respective recessed portions 16, the wall surfaces 4c of the projecting portions 4 directed in the tool rotation direction T abut the wall surfaces 16c of the recessed portions 16 directed in a direction opposite to the tool rotation direction T, and in a state in which the abutment surface of the tool main body 5 of the tool main body 1 abuts and adheres to the abutment surface of the cutting head 17 as described above, the clamp screw 21 which has been inserted through the countersink hole 14 and the penetration hole 13 is rotated by a work tool engaged with the engagement hole 22a. Further, when the male screw portion 24 is screwed into the screw hole 3 of the attachment hole 2 of the tool main body 1, the cutting head 11 is detachably attached to the tip end portion of the tool main body 1.

In the cutting tool with a replaceable cutting head, the cutting head 11, and the tool main body 1 having such constitutions, since the projecting portions 4 which are formed on the tip surface of the tool main body 1 and the recessed portions 16 which are formed on the posterior end surface of the cutting head 11 and into which these projecting portions 4 are inserted are formed to increase in width in the circumferential direction toward the outer peripheral side in the radial direction with respect to the axis O, the cutting head 11 can be attached while a high attachment strength or a high attachment rigidity is secured on the outer peripheral side of the cutting head 11 on which a significant rotational moment acts due to a cutting torque particularly at the time of a cutting operation.

For this reason, since not only can the cutting head 11 be locked and attached to the tool main body 1 but also looseness can be prevented from occurring in the cutting head 11 even if a significant cutting load acts on the cutting edge 12 of the cutting head 11 at the time of a cutting operation. Therefore, according to the cutting tool with a replaceable cutting head, the cutting head 11, and the tool main body 1 having the foregoing constitutions, high machining accuracy and excellent machined surface roughness can be achieved.

In the present embodiment, the recessed portions 16 are formed on the posterior end surface of the cutting head 11, and the projecting portions 4 are formed on the tip surface of the tool main body 1. The wall surfaces 4c of the projecting portions 4 directed in the tool rotation direction T and the wall surfaces 16c of the recessed portions 16 directed in a direction opposite to the tool rotation direction T are formed to extend in the radial direction with respect to the axis O, and these wall surfaces 4c and 16c serve as reception surfaces for receiving a rotational moment due to a cutting torque acting on the cutting edge 12 of the cutting head 11 at the time of a cutting operation.

Therefore, these wall surfaces 4c and 16c are formed to extend in the radial direction with respect to the axis O. Therefore, when a cutting operation is performed in a state in which the wall surfaces 4c and 16c abut each other, even if an excessive cutting load acts on the cutting edge 12, an action of a pulling stress pulling the cutting head 11 to the outer peripheral side in the radial direction with respect to the axis O or conversely, a compression stress compressing the cutting head 11 to the inner peripheral side in the radial direction with respect to the axis O can be avoided.

For this reason, according to the present embodiment, damage to the cutting head 11 occurring due to such a pulling stress or a compression stress can be prevented. Regarding the state in which the wall surfaces 4c and 16c extend in the radial direction with respect to the axis O, the wall surfaces 4c and 16c need only be positioned in a plane including the axis O or slightly inclined to the tool rotation direction T side toward the posterior end side in the axis O direction at a uniform angle with respect to this plane, and the wall surfaces 4c and 16c need only have parts extending in the radial direction with respect to the axis O in any cross-section perpendicular to the axis O.

In the present embodiment, the recessed portions 16 are formed on the posterior end surface of the cutting head 11, the projecting portions 4 are formed on the tip surface of the tool main body 1, and the recessed portions 16 and the projecting portions 4 are also formed to increase in width in the circumferential direction toward the posterior end side of the tool main body 1 and the cutting head 11.

For this reason, the cutting head 11 can be supported with a high attachment strength or a high attachment rigidity at a part where the abutment surface of the tool main body 5 on the tip surface of the tool main body 1 and the abutment surface of the cutting head 17 on the posterior end surface of the cutting head 11 abut and adhere to each other. Therefore, according to the present embodiment, looseness of the cutting head 11 can be more reliably prevented, and higher machining accuracy or more excellent finishing roughness can be achieved. In addition, since the cutting head 11 can also be prevented from being significantly cracked more than necessary due to the recessed portions 16, a higher rigidity can also be applied to the cutting head, and this also allows a cutting operation to be performed with higher accuracy.

In the present embodiment, the cutting edge 12 of the cutting head 11 is the cutting edge 12 of an end mill (radius end mill) including a part of the outer peripheral cutting edge 12a directed to the outer peripheral side of the cutting head 11 and a part of the bottom edge 12b directed to the tip side of the cutting head 11. For this reason, for example, a cutting operation of a wall surface or a bottom surface of a die can be performed using such a cutting edge 12.

In the present embodiment, the penetration hole 13 opening on the abutment surface of the cutting head 17 is formed along the axis O in the cutting head 11, the screw hole 3 is formed along the axis O in the tool main body 1, and the cutting head 11 is detachably attached to the tool main body 1 by screwing the clamp screw 21 including the head portion 22 and inserted through the penetration hole 13 into the screw hole 3.

In the present embodiment, the recessed portions 16 and the projecting portions 4 are formed with intervals therebetween on the outer peripheral side in the radial direction with respect to the axis O from the opening portion of the penetration hole 13 and the opening portion of the screw hole 3 (the opening portion of the attachment hole 2). Therefore, for example, compared to the cutting tool with a replaceable cutting head according to Patent Document 1 in which a key and a key flute are formed to intersect a penetration hole and a screw hole, interference between the clamp screw 21 and the recessed portions 16 or the projecting portions 4 can be prevented.

In the present embodiment, the penetration hole 13 is formed to have a circular cross-sectional shape with a uniform inner diameter centered on the axis O, and the attachment hole 2 having a circular cross-sectional shape with a uniform inner diameter substantially equivalent to that of the penetration hole 13 centered on the axis O is formed at the opening portion of the screw hole 3 to the abutment surface of the tool main body 5 in the tip end portion of the tool main body 1. The clamp screw 21 includes a columnar shaft portion 23 fitted into the penetration hole 13 and the attachment hole 2, and the cutting head 11 is attached coaxially with the axis O of the tool main body 1 when this shaft portion 23 is fitted into the penetration hole 13 and the attachment hole 2.

Since the recessed portions 16 and the projecting portions 4 are formed with intervals therebetween on the outer peripheral side in the radial direction with respect to the axis O from the opening portion of the penetration hole 13 and the opening portion of the attachment hole 2 that is the opening portion of the screw hole 3, interference between the shaft portion 23 of the clamp screw 21 fitted into the penetration hole 13 and the attachment hole 2 and the recessed portions 16 or the projecting portions 4 can be avoided. For this reason, the cutting head 11 can be reliably attached to the tool main body 1 in a coaxial manner while an attachment strength or an attachment rigidity of the cutting head 11 is secured. The inner diameter of the attachment hole 2 and the inner diameter of the penetration hole 13 may not be strictly equivalent to each other, may have a tolerance of several µm, and may have sizes slightly different from each other within a range of this tolerance.

In the present embodiment, the clamp screw 21 is formed of a metal material such as a steel material having the same hardness as or a lower hardness than the tool main body 1, and the cutting head 11 is formed of a cemented carbide having a higher hardness than a steel material. When the Vickers hardness of the cutting head 11 is A, the Vickers hardness of the tool main body 1 is B, and the Vickers hardness of the clamp screw 21 is C, A>B≥C is established.

The clamp screw 21 is formed of a softer material than the cutting head 11. Accordingly, since elasticity can be applied to the clamp screw 21 when the cutting head 11 is pressurized and clamped using the clamp screw 21, the attachment strength of the cutting head 11 can be improved due to this elasticity.

In the present embodiment, the tool main body 1 is formed of a steel material, and the Vickers hardness B is set with respect to the Vickers hardness A of the cutting head 11 made of a cemented carbide such that A>B is established. However, the tool main body 1 may also be formed of a cemented carbide such that A=B>C is established with respect to the Vickers hardness C of the clamp screw 21. In this case, the part around the screw hole 3 of the tool main body 1 may be formed of a steel material, and the screw hole 3 may be formed in the tool main body 1 by being attached thereto through brazing, press-fitting, caulking, or the like.

On the other hand, in the cutting tool with a replaceable cutting head described in Patent Document 1, as illustrated in Fig. 1 of this Patent Document 1, the posterior end surface of the cutting head and the tip surface of the tool main body are formed to have circular external shapes of the same size. Incidentally, in such a case, when the posterior end surface of the cutting head is attached in a manner of being slightly misaligned with respect to the tip surface of the tool main body, if an excessive cutting load acts on the cutting head, there is concern that the tip surface of the tool main body having a low hardness may be pressed by the outer peripheral edge of the posterior end surface of the cutting head and may be damaged such that it is recessed or protrudes.

If the tip surface of the tool main body is damaged such that it is recessed or protrudes, when the cutting head is replaced, there is concern that the posterior end surface of the cutting head to be newly attached may abut the part which has been recessed or protruded and attachment accuracy or an attachment strength of this new cutting head with respect to the tool main body may be impaired. Therefore, in accordance with this, machining accuracy or machined surface roughness of a workpiece is also impaired. This is the same even if the tool main body is made of a cemented carbide as described above.

In contrast, in the cutting tool with a replaceable cutting head, the cutting head 11, and the tool main body 1 of the present embodiment, the outer peripheral edge 17a of the abutment surface of the cutting head 17 of the cutting head 11 protrudes to the outer peripheral side in the radial direction with respect to the axis O beyond the outer peripheral edge 5a of the abutment surface of the tool main body 5 of the tool main body 1, or the outer peripheral edge 5a of the abutment surface of the tool main body 5 retreats to the inner peripheral side in the radial direction with respect to the axis O beyond the outer peripheral edge 17a of the abutment surface of the cutting head 17.

Therefore, as illustrated in Fig. 5, the abutment surface of the cutting head 17 is attached in an overhung state with respect to the tip end portion of the tool main body 1. That is, when the outer peripheral edge 17a of this abutment surface of the cutting head 17 is within a range of protruding beyond the outer peripheral edge 5a of the abutment surface of the tool main body 5, even if the cutting head 11 is attached in a misaligned manner, the outer peripheral edge 5a of the abutment surface of the tool main body 5 does not stick out to the outer peripheral side from the outer peripheral edge 17a of the abutment surface of the cutting head 17.

For this reason, as in the present embodiment, even in a case in which the cutting head 11 is formed of a material having a higher hardness than the tool main body 1 or formed of a material having the same hardness, when an excessive load acts on the cutting edge 12 of the cutting head 11 at the time of a cutting operation, there is no damage such that the outer peripheral edge 17a of the abutment surface of the cutting head 17 is excessively bitten on the abutment surface of the tool main body 5 and recessed, the outer peripheral side of this excessively bitten part is pushed out, and the abutment surface of the tool main body 5 protrudes.

Therefore, when the cutting head 11 is replaced, attachment accuracy or an attachment strength with respect to the tool main body 1 of a new cutting head 11 can be prevented from being impaired due to such a recess or a protrusion on the abutment surface of the tool main body 5. For this reason, machining accuracy or machined surface roughness of a workpiece by this new cutting head 11 can be secured.

In the present embodiment, since the protruding amount (the amount of retreat of the outer peripheral edge 5a of the abutment surface of the tool main body 5 in the inner peripheral side in the radial direction with respect to the axis O with respect to the outer peripheral edge 17a of the abutment surface of the cutting head 17) P of the outer peripheral edge 17a of the abutment surface of the cutting head 17 in the radial direction with respect to the axis O with respect to the outer peripheral edge 5a of the abutment surface of the tool main body 5 is set to be within a range of 0.05 mm to 0.8 mm, the outer peripheral edge 5a of the abutment surface of the tool main body 5 is reliably involved on the abutment surface of the cutting head, the amount of deflection of the tool main body 1 when the outer peripheral edge 5a of the abutment surface of the tool main body 5 and the outer peripheral edge 17a of the abutment surface of the cutting head 17 coincide with each other is in a permissible range, attachment accuracy or an attachment strength of a new cutting head 11 is reliably maintained, and thus a smooth cutting operation can be performed with high accuracy.

If this protruding amount P falls below 0.05 mm, there is concern that damage to the abutment surface of the tool main body 5 due to excessive biting or the like of the outer peripheral edge 17a of the abutment surface of the cutting head 17 may not be able to be prevented depending on the amount of misalignment of the cutting head 11. On the other hand, if this protruding amount P is significant to the extent that it exceeds 0.8 mm, there is concern that the amount of deflection of the tool main body 1 due to a component of a force perpendicular to the axis O in a cutting load at the time of a cutting operation may become excessive and machining accuracy or machined surface roughness of a workpiece due to occurrence of vibration may deteriorate, and there is concern that chips generated through a cutting operation may be caught by the outer peripheral edge 17a of the abutment surface of the cutting head 17 significantly protruding to the outer peripheral side and a smooth cutting operation may be hindered.

In the present embodiment, both the outer peripheral edge 5a of the abutment surface of the tool main body 5 and the outer peripheral edge 17a of the abutment surface of the cutting head 17 are positioned on the circumference centered on the axis O, that is, disposed on the concentric circumference, and the protruding amount P described above is secured throughout the whole circumferences of the tip surface of the tool main body 1 and the posterior end surface of the cutting head 11. For this reason, even if the outer peripheral edge 17a of the abutment surface of the cutting head 17 is attached in a misaligned manner on any outer peripheral side in the radial direction with respect to the axis O, damage to the abutment surface of the tool main body 5 can be prevented, and attachment accuracy or an attachment strength of the cutting head 11 can be more reliably maintained.

In the present embodiment, when the cutting edge 12 includes a part of the bottom edge 12b directed to the tip side of the cutting head 11 as described above, the countersink hole 14 communicating with the penetration hole 13 and opening on the tip side of the cutting head 11 is formed in the cutting head 11, and the clamp screw 21 includes the head portion 22 accommodated in this countersink hole 14.

Since the inner diameter of the countersink hole 14 can be reduced by forming the head portion 22 of this clamp screw 21 in a disk shape centered on the axis O as in the present embodiment, the opening portion of the countersink hole 14 opening at the tip end portion of the cutting head 11 can be reduced. For this reason, a cutting edge having a long length can be secured at a part of the bottom edge 12b directed to the tip side of the cutting edge 12 described above, and the cutting head 11 is not reduced in thickness in the vicinity of the part of this bottom edge 12b. Therefore, damage to the cutting head 11 from such a part can be prevented.

The head portion 22 of the clamp screw 21 is formed to have a disk shape, and in the present embodiment, the bottom surface 14a of the countersink hole 14 is merely parallel to the abutment surface of the cutting head 17 or inclined to be directed to the posterior end side toward the inner peripheral side of the cutting head 11 with respect to the abutment surface of the cutting head 17 at a small angle that is 5° or smaller in a cross section along the axis O. For this reason, only a clamping force acts on the cutting head 11 substantially directed to the posterior end side in the axis O direction due to screwing of the clamp screw 21.

Therefore, for example, a countersink component of a force toward the outer peripheral side in the radial direction with respect to the axis O does not act on the cutting head 11 in addition to a clamping force of the tool main body 1 directed to the posterior end side in the axis O direction as in the case in which a cutting head is clamped by pressurizing a tapered countersink hole using a head portion of a clamp screw having a truncated cone shape as in the cutting tool with a replaceable cutting head described in Patent Document 1.

For this reason, situations in which the cutting head 11 is deformed such that it increases in diameter due to such a component of a force toward the outer peripheral side in the radial direction, a machining diameter of a workpiece fluctuates, or deviation in a radial direction occurs in a clamping force by the clamp screw 21 do not occur. Therefore, a cutting operation can be performed with higher accuracy.

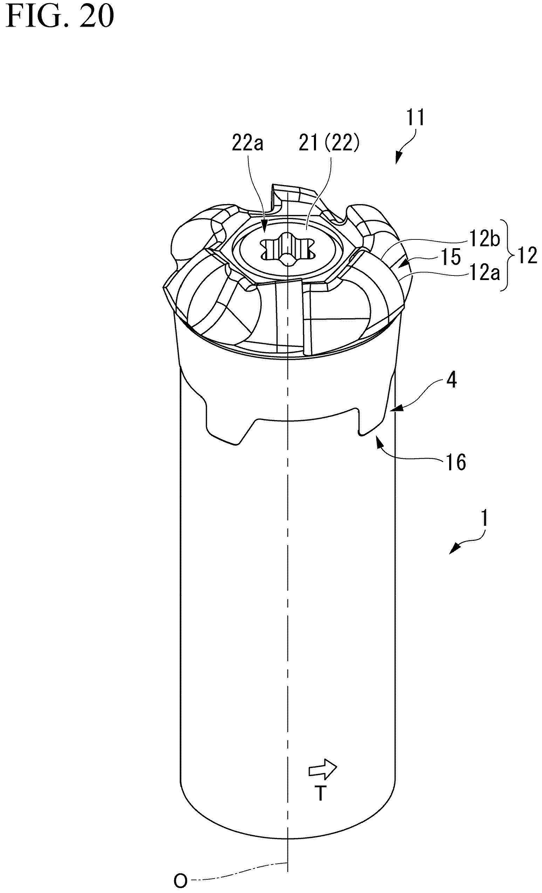

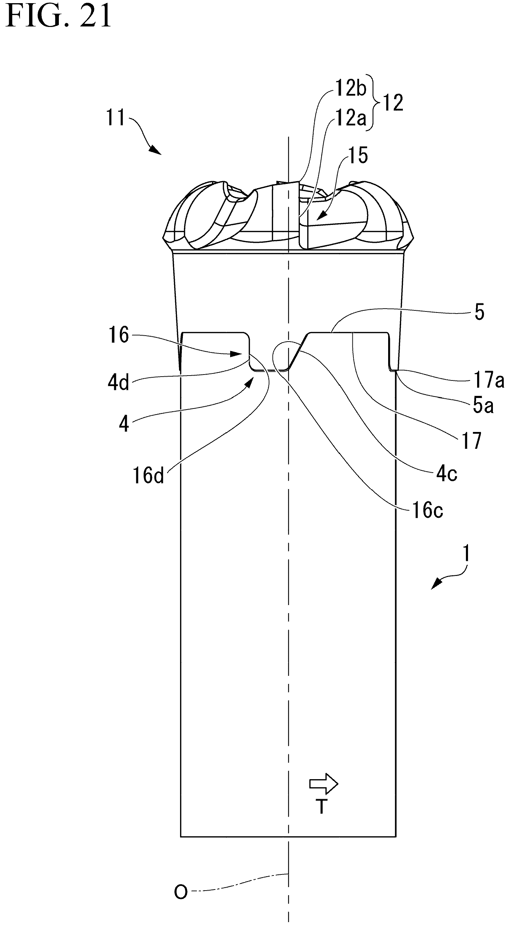

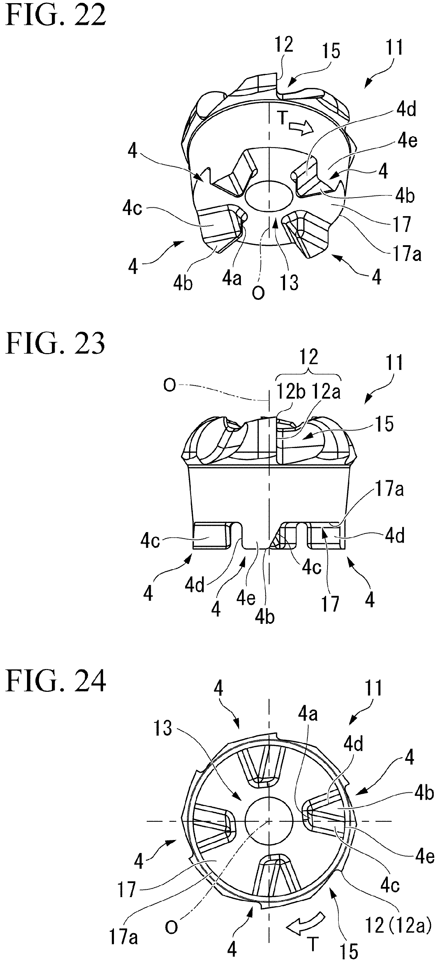

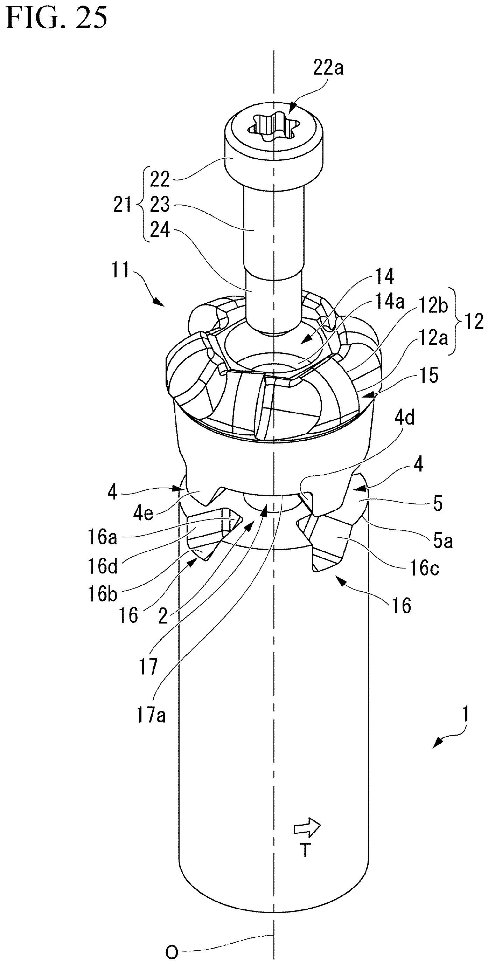

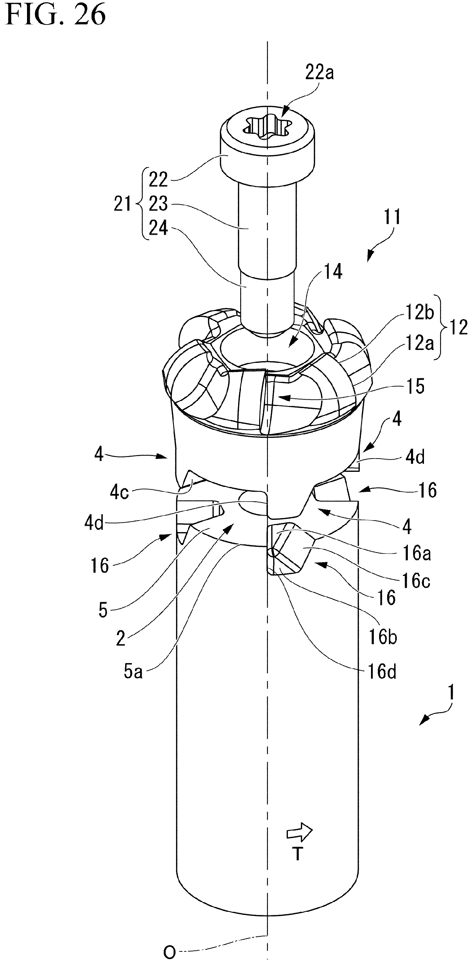

Figs. 20 to 26 illustrate a second embodiment of the cutting tool with a replaceable cutting head, the cutting head 11, and the tool main body 1 of the present invention, and the same reference signs are assigned to parts common to those in the first embodiment illustrated in Figs. 1 to 19. In the first embodiment, the projecting portions 4 are formed on the tip surface of the tool main body 1, and the recessed portions 16 into which these projecting portions 4 are inserted are formed on the posterior end surface of the cutting head 11. On the contrary, in the second embodiment, the recessed portions 16 are formed on the tip surface of the tool main body 1, and the projecting portions 4 inserted into these recessed portions 16 are formed on the posterior end surface of the cutting head 11.

The recessed portions 16 and the projecting portions 4 are also formed to increase in width in the circumferential direction toward the outer peripheral side in the radial direction with respect to the axis O. That is, the lengths of the bottom surfaces and the tip surfaces of the recessed portions 16 and the projecting portions 4 in the circumferential direction are respectively formed such that they increase toward the outer peripheral side in the radial direction with respect to the axis O. In addition, in the second embodiment in which the projecting portions 4 are formed on the posterior end surface of the cutting head 11 and the recessed portions 16 are formed on the tip surface of the tool main body 1, on the contrary to the first embodiment, the cutting head 11 is attached to the tool main body 1 in a state in which the wall surfaces 4d of the projecting portions 4 directed in a direction opposite to the tool rotation direction T and the wall surfaces 16d of the recessed portions 16 directed in the tool rotation direction T abut each other, and these wall surfaces 4d and 16d are formed to extend in the radial direction with respect to the axis O.

In the second embodiment in which the projecting portions 4 are formed on the posterior end surface of the cutting head 11 and the recessed portions 16 are formed on the tip surface of the tool main body 1, on the contrary to the first embodiment, the recessed portions 16 and the projecting portions 4 are formed to increase in width in the circumferential direction toward the tip sides of the tool main body 1 and the cutting head 11.

In this second embodiment, the recessed portions 16 are formed with intervals therebetween on the outer peripheral side in the radial direction with respect to the axis O from the opening portion of the screw hole 3 of the tool main body 1 (the opening portion of the attachment hole 2), and the projecting portions 4 are formed with intervals therebetween on the outer peripheral side in the radial direction with respect to the axis O from the opening portion of the penetration hole 13 of the cutting head 11. The side surfaces 4e of the projecting portions 4, which are formed in the cutting head 11, directed to the outer peripheral side in the radial direction with respect to the axis O are formed to be flush with the outer peripheral surface of the posterior end portion of the cutting head 11 having a truncated cone shape.

Also in the cutting tool with a replaceable cutting head, the cutting head 11, and the tool main body 1 of such a second embodiment, since the recessed portions 16 and the projecting portions 4 are formed to increase in width in the circumferential direction toward the outer peripheral side in the radial direction with respect to the axis O, similar to the first embodiment, a high attachment strength or a high attachment rigidity can be secured on the outer peripheral side of the cutting head 11 on which a significant rotational moment acts due to a cutting torque at the time of a cutting operation. For this reason, looseness can be prevented from occurring in the cutting head 11 even if a significant cutting load acts on the cutting edge 12 at the time of a cutting operation, and thus high machining accuracy and excellent machined surface roughness can be achieved.

Since the wall surfaces 4d and 16d of the projecting portions 4 and the recessed portions 16 abutting each other are formed to extend in the radial direction with respect to the axis O, even if an excessive cutting load acts on the cutting edge 12, a pulling stress or a compression stress acting on the cutting head 11 in the radial direction with respect to the axis O can be avoided, and occurrence of damage to the cutting head 11 can be prevented.

Since the recessed portions 16 formed in the tool main body 1 and the projecting portions 4 formed in the cutting head 11 are also formed to increase in width in the circumferential direction toward the tip sides of the tool main body 1 and the cutting head 11, a higher attachment strength or a higher attachment rigidity can be secured, looseness in the cutting head 11 is reliably prevented, and thus higher machining accuracy and more excellent machined surface roughness can be achieved.

Since the recessed portions 16 are formed with intervals therebetween on the outer peripheral side in the radial direction with respect to the axis O from the opening portion of the screw hole 3 (the opening portion of the attachment hole 2) of the tool main body 1, and the projecting portions 4 are formed with intervals therebetween on the outer peripheral side in the radial direction with respect to the axis O from the opening portion of the penetration hole 13 of the cutting head 11, interference between the projecting portions 4 or the recessed portions 16 and the shaft portion 23 of the clamp screw 21 or the clamp screw 21 can be avoided.

### Industrial Applicability

According to the present invention, since not only can a cutting head be locked and attached to a tool main body but also the cutting head can be attached while a high attachment strength or a high attachment rigidity is secured on an outer peripheral side of the cutting head on which a significant rotational moment acts due to a cutting torque at the time of a cutting operation, looseness can be prevented from occurring in the cutting head even if a significant cutting load acts on a cutting edge of the cutting head at the time of a cutting operation, and thus high machining accuracy and excellent machined surface roughness can be achieved.

### Reference Signs List

1 Tool main body
2 Attachment hole
3 Screw hole
4 Projecting portion
4c Wall surface of projecting portions 4 directed in tool rotation direction T
4d Wall surface of projecting portions 4 directed to side opposite to tool rotation direction T
5 Abutment surface of the tool main body
5a Outer peripheral edge of abutment surface of the tool main body 5
11 Cutting head
12 Cutting edge
12a Outer peripheral cutting edge (part of cutting edge 12 directed to outer peripheral side of cutting head 11)
12b Bottom edge (part of cutting edge 12 directed to tip side of cutting head 11)
13 Penetration hole
14 Countersink hole
14a Bottom surface of countersink hole 14
16 Recessed portion
16c Wall surface of recessed portions 16 directed to side opposite to tool rotation direction T
16d Wall surface of recessed portions 16 directed in tool rotation direction T
17 Abutment surface of the cutting head
17a Outer peripheral edge of abutment surface of the cutting head 17
21 Clamp screw
22 Head portion of clamp screw 21
23 Shaft portion of clamp screw 21
24 Male screw portion of clamp screw 21
O Axis of tool main body 1
T Tool rotation direction
P Protruding amount of outer peripheral edge 17a of abutment surface of the cutting head 17 in radial direction with respect to axis O with respect to outer peripheral edge 5a of abutment surface of the tool main body 5

## Claims

1. A cutting tool with a replaceable cutting head in which a cutting head including a cutting edge is detachably attached to a tip end portion of a shaft-like tool main body rotated around an axis in a tool rotation direction,
wherein the tool main body and the cutting head are attached to each other when an abutment surface of the tool main body on a tip surface of the tool main body abuts and adheres to an abutment surface of the cutting head on a posterior end surface of the cutting head,
wherein a recessed portion and a projecting portion able to be inserted into the recessed portion are respectively formed on the posterior end surface of the cutting head and the tip surface of the tool main body, and
wherein the recessed portion and the projecting portion are formed to increase in width in a circumferential direction toward an outer peripheral side in a radial direction with respect to the axis.

2. The cutting tool with a replaceable cutting head according to claim 1,
wherein the recessed portion is formed on the posterior end surface of the cutting head, and the projecting portion is formed on the tip surface of the tool main body, and
wherein a wall surface of the projecting portion directed in the tool rotation direction and a wall surface of the recessed portion directed in a direction opposite to the tool rotation direction extend in the radial direction with respect to the axis.

3. The cutting tool with a replaceable cutting head according to claim 1 or 2,
wherein the recessed portion is formed on the posterior end surface of the cutting head, and the projecting portion is formed on the tip surface of the tool main body, and
wherein the recessed portion and the projecting portion are formed to increase in width in the circumferential direction toward posterior end sides of the tool main body and the cutting head.

4. The cutting tool with a replaceable cutting head according to claim 1,
wherein the projecting portion is formed on the posterior end surface of the cutting head, and the recessed portion is formed on the tip surface of the tool main body, and
wherein a wall surface of the projecting portion directed in a direction opposite to the tool rotation direction and a wall surface of the recessed portion directed in the tool rotation direction extend in the radial direction with respect to the axis.

5. The cutting tool with a replaceable cutting head according to claim 1 or 4,
wherein the projecting portion is formed on the posterior end surface of the cutting head, and the recessed portion is formed on the tip surface of the tool main body, and
wherein the recessed portion and the projecting portion are formed to increase in width in the circumferential direction toward tip sides of the tool main body and the cutting head.

6. The cutting tool with a replaceable cutting head according to any one of claims 1 to 5,
wherein the cutting edge includes a part directed to the outer peripheral side of the cutting head and a part directed to the tip side of the cutting head.

7. The cutting tool with a replaceable cutting head according to any one of claims 1 to 6,
wherein a penetration hole opening on the abutment surface of the cutting head is formed along the axis in the cutting head,
wherein a screw hole is formed along the axis in the tool main body,
wherein the cutting head is detachably attached to the tool main body by screwing a clamp screw including a head portion and inserted through the penetration hole into the screw hole, and
wherein the recessed portion and the projecting portion are formed with an interval therebetween on the outer peripheral side in the radial direction with respect to the axis from an opening portion of the penetration hole and an opening portion of the screw hole.

8. The cutting tool with a replaceable cutting head according to claim 7,
wherein the penetration hole is formed to have a circular cross-sectional shape with a uniform inner diameter centered on the axis,
wherein a countersink hole communicating with the penetration hole and opening on the tip side of the cutting head is formed on the tip side of the cutting head,
wherein an attachment hole having a circular cross-sectional shape with a uniform inner diameter equivalent to an inner diameter of the penetration hole centered on the axis is formed in the opening portion of the screw hole toward the abutment surface of the tool main body at the tip end portion of the tool main body, and
wherein the clamp screw has the disk-shaped head portion which is accommodated in the countersink hole, a columnar shaft portion which extends to the posterior end side of the head portion and is fitted into the penetration hole and the attachment hole, and a male screw portion which extends to the posterior end side of the shaft portion and is screwed into the screw hole.

9. The cutting tool with a replaceable cutting head according to claim 7 or 8,
wherein when a Vickers hardness of the cutting head is A, a Vickers hardness of the tool main body is B, and a Vickers hardness of the clamp screw is C, a relationship of A>B≥C or A≥B>C is established.

10. A cutting head which is detachably attached to a tip end portion of a shaft-like tool main body rotated around an axis in a tool rotation direction in the cutting tool with a replaceable cutting head according to any one of claims 1 to 9,
wherein the cutting head includes a cutting edge,
wherein an abutment surface of the cutting head which abuts and adheres to an abutment surface of the tool main body on a tip surface of the tool main body and a recessed portion into which a projecting portion formed on the tip surface of the tool main body is inserted or a projecting portion which is inserted into a recessed portion formed on the tip surface of the tool main body are formed on a posterior end surface of the cutting head, and
wherein the recessed portion or the projecting portion is formed to increase in width in a circumferential direction toward an outer peripheral side in a radial direction with respect to the axis.

11. A shaft-like tool main body in which a cutting head is detachably attached to a tip end portion thereof and which is rotated around an axis in a tool rotation direction in the cutting tool with a replaceable cutting head according to any one of claims 1 to 9,
wherein an abutment surface of the tool main body which abuts and adheres to an abutment surface of the cutting head on a posterior end surface of the cutting head is formed on a tip surface of the tool main body,
wherein a projecting portion which is inserted into a recessed portion formed on the posterior end surface of the cutting head or a recessed portion into which a projecting portion formed on the posterior end surface of the cutting head is inserted is formed on the tip surface of the tool main body, and
wherein the projecting portion or the recessed portion is formed to increase in width in a circumferential direction toward an outer peripheral side in a radial direction with respect to the axis.
